# EUROPEAN PATENT APPLICATION

(11) **EP 4 727 226 A1**
(43) Date of publication of application: **15.04.2026**
(21) Application number: 24822441.2
(22) Date of filing: 08.05.2024
(51) Int. Cl.: H04W 60/00

(54) **INFORMATION PROCESSING METHOD AND APPARATUS, AND READABLE STORAGE MEDIUM**

(30) Priority: 12.06.2023 CN 202310692380
(71) Applicant: Datang Mobile Communications Equipment Co., Ltd., Beijing 100085 (CN)
(72) Inventor: ZHAO, Xiaoxue, Beijing 100085 (CN); LI, Yun, Beijing 100085 (CN); LIU, Xianfeng, Beijing 100085 (CN); WAN, Qing, Beijing 100085 (CN); WANG, Hucheng, Beijing 100085 (CN); LIU, Yingying, Beijing 100085 (CN)
(74) Representative: Studio Torta S.p.A.
(86) International application number: PCT/CN2024/091637
(87) International publication number: WO 2024/255487

(57) **Abstract**

This disclosure provides an information processing method and apparatus, and a readable storage medium, and relates to the field of communication technology, to make reasonable use of S&F resources on a satellite. The method includes: receiving first information sent by an access network device, wherein the first information includes an S&F capability identifier and/or an S&F margin identifier; and sending a first S&F request to a core network device based on the first information; wherein the S&F capability identifier is used for indicating an S&F capability of a satellite, and the S&F margin identifier is used for indicating storage capacity information of the satellite.

## Description

### CROSS-REFERENCE TO RELATED APPLICATION

This application claims priority to Chinese Patent Application No. 202310692380.9, filed with CNIPA on June 12, 2023, and entitled "Information Processing Method and Apparatus, and Readable Storage Medium", disclosure of which is incorporated herein by reference in its entirety.

### TECHNICAL FIELD

This disclosure relates to the field of communication technology, and in particular to an information processing method and apparatus, and readable storage medium.

### BACKGROUND

In related art, terminals can perform data transmission via satellite communication. After data is uploaded to the satellite, the data stored on the satellite is forwarded once the satellite connects to the gateway station.

However, if the terminal continuously initiates on-satellite data store and forward (S&F) services, a large amount of the satellite's S&F resources are consumed. Therefore, a mechanism is needed to make reasonable use of the satellite's S&F resources.

### SUMMARY

This disclosure provides an information processing method and apparatus, and readable storage medium, to make reasonable use of storage-and-forward resources of a satellite.

In a first aspect, an embodiment of this disclosure provides an information processing method performed by a terminal, including:
receiving first information sent by an access network device, wherein the first information includes an S&F capability identifier and/or an S&F margin identifier; and
sending a first S&F request to a core network device based on the first information;
wherein the S&F capability identifier is used for indicating an S&F capability of a satellite, and the S&F margin identifier is used for indicating storage capacity information of the satellite.

In some embodiments, sending the first S&F request to the core network device based on the first information includes:
sending a registration request to the core network device based on the first information, wherein the registration request includes an S&F identifier; or
sending a protocol data unit (PDU) session establishment request to the core network device based on the first information, wherein the PDU session establishment request includes the S&F identifier.

In some embodiments, the method further includes:
receiving second information sent by a network device, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

In some embodiments, the method further includes one or more of the following:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

In some embodiments, the S&F satellite operation parameter includes one or more of the following:
time trigger information;
area trigger information;
event trigger information.

In some embodiments, the second information is sent in one or more of the following ways:
registration acceptance message, radio resource control (RRC) reconfiguration message, user equipment (UE) configuration update message, RRC access response; and/or
the second S&F request is sent in one or more of the following ways:
   registration message, PDU session establishment request, PDU session modification request.

In some embodiments, the method further includes:
receiving a configuration update indication sent by the core network device, wherein the configuration update indication is used for updating one or more pieces of information in the second information, and/or, the configuration update indication includes an S&F request prohibition timer indication;
updating the second information according to the configuration update indication, and/or updating and restarting the first timer.

In a second aspect, an embodiment of this disclosure provides an information processing method, performed by an access network device, including:
sending first information to a terminal, wherein the first information includes an S&F capability identifier and/or an S&F margin identifier;
wherein the S&F capability identifier is used for indicating an S&F capability of a satellite, and the S&F margin identifier is used for indicating storage capacity information of the satellite.

In some embodiments, the method further includes:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to a first S&F request sent by the terminal.

In some embodiments, sending the second information to the terminal includes:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the method further includes:
receiving a configuration update indication sent by a core network device, wherein the configuration update indication is used for updating one or more pieces of information in the second information, and/or the configuration update indication includes an S&F request prohibition timer indication;
sending the configuration update indication to the terminal.

In a third aspect, an embodiment of this disclosure provides an information processing method performed by a core network device, including:
receiving a first S&F request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

In some embodiments, receiving the first S&F request sent by the terminal includes:
receiving a registration request sent by the terminal, wherein the registration request includes an S&F identifier; or
receiving a PDU session establishment request sent by the terminal, wherein the PDU session establishment request includes the S&F identifier.

In some embodiments, the method further includes:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

In some embodiments, sending the second information to the terminal includes:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the second information is sent in one or more of the following ways:
registration acceptance message, RRC reconfiguration message, UE configuration update message, RRC access response;
   and/or
the second S&F request is sent in one or more of the following ways:
   registration message, PDU session establishment request, PDU session modification request.

In some embodiments, the S&F satellite operation parameter includes one or more of the following:
time trigger information;
area trigger information;
event trigger information.

In some embodiments, the method further includes:
setting a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

In some embodiments, the method further includes:
sending a configuration update indication to the terminal, wherein the configuration update indication is used for updating one or more pieces of information in the second information, and/or, the configuration update indication includes an S&F request prohibition timer indication;
updating and restarting the second timer.

In a fourth aspect, an embodiment of this disclosure further provides an information processing apparatus applied to a terminal, including: a memory, a transceiver, and a processor; wherein
the memory is used for storing a computer program; the transceiver is used for sending and receiving data under the control of the processor; and the processor is used for reading the computer program from the memory and performing the following steps:
receiving first information sent by an access network device, wherein the first information includes an S&F capability identifier and/or an S&F margin identifier; and
sending a first S&F request to a core network device based on the first information;
wherein the S&F capability identifier is used for indicating an S&F capability of a satellite, and the S&F margin identifier is used for indicating storage capacity information of the satellite.

In some embodiments, the processor is further used for reading a computer program from the memory and performing the following step:
sending a registration request to the core network device based on the first information, wherein the registration request includes an S&F identifier; or
sending a PDU session establishment request to the core network device based on the first information, wherein the PDU session establishment request includes the S&F identifier.

In some embodiments, the processor is further used for reading a computer program from the memory and performing the following step:
receiving second information sent by a network device, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

In some embodiments, the processor is further used for reading the computer program from the memory and performing one or more of the following steps:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

In some embodiments, the S&F satellite operation parameter includes one or more of the following:
time trigger information;
area trigger information;
event trigger information.

In some embodiments, the second information is sent in one or more of the following ways:
registration acceptance message, RRC reconfiguration message, UE configuration update message, RRC access response; and/or
the second S&F request is sent in one or more of the following ways:
   registration message, PDU session establishment request, PDU session modification request.

In some embodiments, the processor is further used for reading a computer program from the memory and performing the following steps:
receiving a configuration update indication sent by the core network device, wherein the configuration update indication is used for updating one or more pieces of information in the second information, and/or, the configuration update indication includes an S&F request prohibition timer indication;
updating the second information according to the configuration update indication, and/or updating and restarting the first timer.

In a fifth aspect, an embodiment of this disclosure provides an information processing apparatus applied to an access network device, including: a memory, a transceiver, and a processor; wherein
the memory is used for storing a computer program; the transceiver is used for sending and receiving data under the control of the processor; and the processor is used for reading the computer program from the memory and performing the following steps:
sending first information to a terminal, wherein the first information includes an S&F capability identifier and/or an S&F margin identifier;
wherein the S&F capability identifier is used for indicating an S&F capability of a satellite, and the S&F margin identifier is used for indicating storage capacity information of the satellite.

In some embodiments, the processor is further used for reading a computer program from the memory and performing the following step:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to a first S&F request sent by the terminal.

In some embodiments, the processor is further used for reading a computer program from the memory and performing the following step:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the processor is further used for reading a computer program from the memory and performing the following steps:
receiving a configuration update indication sent by a core network device, wherein the configuration update indication is used for updating one or more pieces of information in the second information, and/or, the configuration update indication includes an S&F request prohibition timer indication;
sending the configuration update indication to the terminal.

In a sixth aspect, an embodiment of this disclosure provides an information processing apparatus applied to a core network device, including: a memory, a transceiver, and a processor; wherein
the memory is used for storing a computer program; the transceiver is used for sending and receiving data under the control of the processor; and the processor is used for reading the computer program from the memory and performing the following step:
receiving a first S&F request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

In some embodiments, the processor is further used for reading a computer program from the memory and performing the following step:
receiving a registration request sent by the terminal, wherein the registration request includes an S&F identifier; or
receiving a PDU session establishment request sent by the terminal, wherein the PDU session establishment request includes the S&F identifier.

In some embodiments, the processor is further used for reading a computer program from the memory and performing the following step:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

In some embodiments, the processor is further used for reading a computer program from the memory and performing the following step:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the second information is sent in one or more of the following ways:
registration acceptance message, RRC reconfiguration message, UE configuration update message, RRC access response;
   and/or
the second S&F request is sent in one or more of the following ways:
   registration message, PDU session establishment request, PDU session modification request.

In some embodiments, the S&F satellite operation parameter includes one or more of the following:
time trigger information;
area trigger information;
event trigger information.

In some embodiments, the processor is further used for reading a computer program from the memory and performing the following step:
setting a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

In some embodiments, the processor is further used for reading a computer program from the memory and performing the following steps:
sending a configuration update indication to the terminal, wherein the configuration update indication is used for updating one or more pieces of information in the second information, and/or, the configuration update indication includes an S&F request prohibition timer indication;
updating and restarting the second timer.

In a seventh aspect, an embodiment of this disclosure provides an information processing apparatus applied to a terminal, including:
a first receiving unit, configured to receive first information sent by an access network device, wherein the first information includes an S&F capability identifier and/or an S&F margin identifier;
a first sending unit, configured to send a first S&F request to a core network device based on the first information;
wherein the S&F capability identifier is used for indicating an S&F capability of a satellite, and the S&F margin identifier is used for indicating storage capacity information of the satellite.

In an eighth aspect, an embodiment of this disclosure provides an information processing apparatus applied to an access network device, including:
a first sending unit, configured to send first information to a terminal, wherein the first information includes an S&F capability identifier and/or an S&F margin identifier;
wherein the S&F capability identifier is used for indicating an S&F capability of a satellite, and the S&F margin identifier is used for indicating storage capacity information of the satellite.

In a ninth aspect, an embodiment of this disclosure provides an information processing apparatus applied to a core network device, including:
a first receiving unit, configured to receive a first S&F request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

In a tenth aspect, an embodiment of this disclosure further provides a processor-readable storage medium storing a computer program, wherein the computer program, when executed by a processor, implements the steps of the information processing methods described above.

In embodiments of the disclosure, the terminal sends a first S&F request to the core network device based on the first information of the access network device. Since the first information includes an S&F capability identifier and/or an S&F margin identifier, where the S&F capability identifier indicates an S&F capability of a satellite and the S&F margin identifier indicates storage capacity information of the satellite, the first S&F request sent by the terminal can be determined based on the first information or satisfy the requirements of the first information, thereby enabling reasonable utilization of the S&F resources of the satellite.

### BRIEF DESCRIPTION OF THE DRAWINGS

Fig. 1 is a first flowchart of an information processing method according to an embodiment of this disclosure;
Fig. 2 is a second flowchart of an information processing method according to an embodiment of this disclosure;
Fig. 3 is a third flowchart of an information processing method according to an embodiment of this disclosure;
Fig. 4 is an architectural diagram of an embodiment of this disclosure;
Fig. 5 is another architectural diagram of an embodiment of this disclosure;
Fig. 6 is a fourth flowchart of an information processing method according to an embodiment of this disclosure;
Fig. 7 is a fifth flowchart of an information processing method according to an embodiment of this disclosure;
Fig. 8 is a sixth flowchart of an information processing method according to an embodiment of this disclosure;
Fig. 9 is a seventh flowchart of an information processing method according to an embodiment of this disclosure.
Fig. 10 is a first structural diagram of an information processing apparatus according to an embodiment of this disclosure;
Fig. 11 is a second structural diagram of an information processing apparatus according to an embodiment of this disclosure;
Fig. 12 is a third structural diagram of an information processing apparatus according to an embodiment of this disclosure;
Fig. 13 is a fourth structural diagram of an information processing apparatus according to an embodiment of this disclosure;
Fig. 14 is a fifth structural diagram of an information processing apparatus according to an embodiment of this disclosure;
Fig. 15 is a sixth structural diagram of an information processing apparatus according to an embodiment of this disclosure.

### DETAILED DESCRIPTION

In embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following objects have an "or" relationship.

In embodiments of this disclosure, the term "multiple" refers to two or more, and other quantifiers are similar.

The technical solution in embodiments of this disclosure will be clearly and completely described below with reference to the accompanying drawings. Obviously, the described embodiments are only some embodiments of this disclosure, and not all embodiments. All other embodiments obtained by those of ordinary skill in the art based on the embodiments of this disclosure without creative effort are within the scope of this disclosure.

Embodiments of this disclosure provide an information processing method and apparatus for making reasonable use of store and forward (S&F) resources of a satellite.

The method and apparatus are based on the same concept of the application. Since the method and apparatus solve problems in similar ways, for the implementation of one of the apparatus and method, reference may be made to the other of the apparatus and method, and the repeated parts will not be described again.

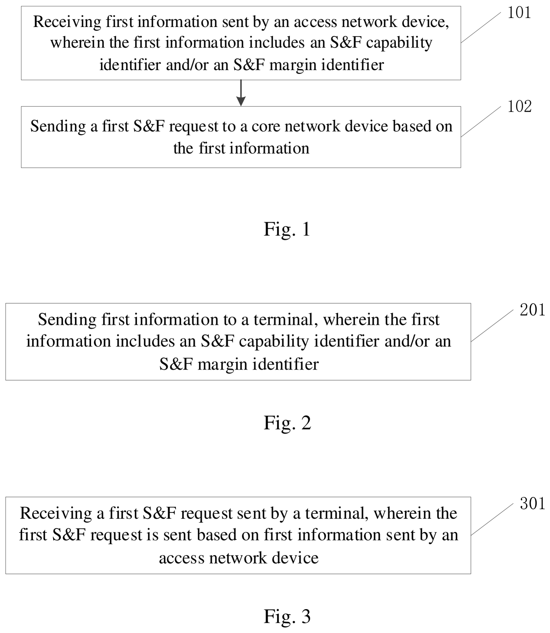

Referring to Fig. 1, Fig. 1 is a flowchart of an information processing method according to an embodiment of this disclosure. This method can be performed by a terminal. As shown in Fig. 1, the method includes the following steps 101 and 102.

Step 101: receiving first information sent by an access network device, wherein the first information includes a store and forward (S&F) capability identifier and/or an S&F margin identifier.

For example, when the network side supports on-satellite S&F service, the network side can send first information to the terminal, and correspondingly, the terminal can receive the first information sent by the access network device. The S&F capability identifier is used for indicating an S&F capability of a satellite, e.g., whether the satellite has S&F capability; the S&F margin identifier is used for indicating storage capacity information of a satellite, e.g., whether the satellite has storage margin; in some embodiments, if there is storage margin, the S&F margin identifier indicates the storage margin of the satellite, etc. The access network device can be, for example, a base station.

Step 102: sending a first S&F request to a core network device based on the first information.

**In** this step, the terminal may send a registration request to the core network device based on the first information, wherein the registration request includes an S&F identifier; or, the terminal may send a Protocol Data Unit (PDU) session establishment request to the core network device based on the first information, wherein the PDU session establishment request includes an S&F identifier. The S&F identifier can be used to indicate that the registration request or the PDU session establishment request is an S&F request.

In the embodiment of the disclosure, the terminal sends a first S&F request to the core network device based on the first information obtained from the access network device. Since the first information includes an S&F capability identifier and/or an S&F margin identifier, where the S&F capability identifier indicates an S&F capability of a satellite and the S&F margin identifier indicates storage capacity information of the satellite, the first S&F request sent by the terminal can be determined based on the first information or satisfy the requirements of the first information, thereby enabling reasonable utilization of the S&F resources of the satellite.

In some embodiments, the terminal may also receive second information sent by a network device, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request, such as the size of the storage capacity, the limit of the storage capacity;
an S&F satellite operation parameter;
wherein the second S&F request includes an S&F request temporally subsequent to the first S&F request. This second S&F request can also be referred to as a subsequent S&F request, including one or more S&F requests that may be sent after the first S&F request. The second S&F request can be sent specific to the terminal, i.e., sent based on a granularity of terminal, or can be sent specific to a PDU session, i.e., sent based on a granularity of PDU session.

The network device may include an access network device, a core network device such as Session Management Function (SMF) and Access and Mobility Management Function (AMF), or the like. The current time may be, for example, the time when the embodiment of the present disclosure is implemented, or other specified time.

The S&F satellite operation parameter includes one or more of the following:
time trigger information, e.g., a terminal sends a second S&F request at a specific time, or transmits data for on-satellite S&F to the satellite at a specific time;
area trigger information, e.g., when the terminal moves to certain areas (e.g., there is no terrestrial base station, the area is within the satellite coverage but the satellite in the area has no feeder link), the terminal sends a second S&F request, and the terminal transmits on-satellite S&F data to the satellite when the terminal moves to certain areas (e.g., there is no terrestrial base station, the area is within the satellite coverage but the satellite in the area has no feeder link);
event trigger information, e.g., events like the terminal moving too fast or the terminal preferring to use on-satellite S&F.

In embodiments of the disclosure, the aforementioned specific time, specific area, specific event, etc., can be notified to the terminal by the network side via a Non-Access Stratum (NAS) message (e.g., registration acceptance message, PDU session acceptance message), or can be pre-configured in the terminal.

The second information is sent in one or more of the following ways:
registration acceptance message, radio resource control (RRC) reconfiguration message, user equipment (UE) configuration update message, and RRC access response.

The second S&F request is sent in one or more of the following ways:
registration message, PDU session establishment request, PDU session modification request.

Upon receiving the second information, the terminal may perform one or more of the following operations.
1) Set a first timer, wherein a duration of the first timer is greater than or equal to a time gap determined according to the first time information, and the first timer is used for indicating that it is prohibited to send the second S&F request before the first timer expires.

Specifically, the on-satellite storage capacity requested by the second S&F request meets the on-satellite storage capacity requirement indicated by the first indication information. For example, the on-satellite storage capacity requested by the second S&F request is less than or equal to the on-satellite storage capacity indicated by the first indication information; the sum of the on-satellite storage capacities requested by multiple second S&F requests is less than or equal to the on-satellite storage capacity indicated by the first indication information.

The first timer includes a first timer specific to the terminal, or a first timer specific to the PDU session. That is, before the first timer expires, the terminal will not send S&F requests, or the terminal will not send S&F requests for the PDU session.

2) If it is detected that the S&F satellite operation parameter is satisfied, send the second S&F request.

For example, when the terminal moves too fast (e.g., the speed is greater than a preset value, which can be set as needed), the second S&F request is sent.

Specifically, the on-satellite storage capacity requested by the second S&F request meets the on-satellite storage capacity requirement indicated by the first indication information. For example, the on-satellite storage capacity requested by the second S&F request is less than or equal to the on-satellite storage capacity indicated by the first indication information; the sum of the on-satellite storage capacities requested by multiple second S&F requests is less than or equal to the on-satellite storage capacity indicated by the first indication information.

3) Send the second S&F request. The on-satellite storage capacity requested by the second S&F request meets the on-satellite storage capacity requirement indicated by the first indication information. For example, the on-satellite storage capacity requested by the second S&F request is less than or equal to the on-satellite storage capacity indicated by the first indication information; the sum of the on-satellite storage capacities requested by multiple second S&F requests is less than or equal to the on-satellite storage capacity indicated by the first indication information.

Based on the above embodiments, the terminal may also receive a configuration update indication sent by the core network device, wherein the configuration update indication is used for updating one or more pieces of information in the second information, and/or, the configuration update indication includes an S&F request prohibition timer indication. Subsequently, the terminal updates the second information according to the configuration update indication, and/or updates and restarts the first timer.

Referring to Fig. 2, Fig. 2 is a flowchart of an information processing method according to an embodiment of this disclosure. The method can be performed by an access network device, such as a base station. As shown in Fig. 2, the method includes the following step 201.

Step 201: sending first information to a terminal, wherein the first information includes an S&F capability identifier and/or an S&F margin identifier.

The S&F capability identifier is used for indicating an S&F capability of a satellite, and the S&F margin identifier is used for indicating the satellite's storage capacity information. The S&F capability identifier and/or S&F margin identifier can be determined by a core network element (AMF or SMF) based on whether the satellite has the S&F capability and the available margin for supporting on-satellite S&F, and then notified to the access network device.

For example, when the network side supports on-satellite S&F service, the access network device sends first information to the terminal. The description and meaning of the first information can be found in the description of the foregoing embodiments.

**In** the embodiment of the disclosure, the terminal sends a first S&F request to the core network device based on the first information obtained from the access network device. Since the first information includes an S&F capability identifier and/or an S&F margin identifier, where the S&F capability identifier is used for indicating an S&F capability of a satellite and the S&F margin identifier is used for indicating storage capacity information of the satellite, the first S&F request sent by the terminal can be determined based on the first information or satisfy the requirements of the first information, thereby enabling reasonable utilization of the S&F resources of the satellite.

Based on the above embodiments, the access network device may also send second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to a first S&F request sent by the terminal.

The description and meaning of the second information can be found in the description of the aforementioned method embodiments.

In the embodiment of the disclosure, the access network device may send second information to the terminal based on one or more of the following information:
remaining storage capacity on the satellite;
terminal priority;
service priority;
the amount of on-satellite storage services requested by the terminal this time;
ephemeris information, e.g., the time when the terminal has access to the satellite next time, and the satellite capacity of the satellite network that the terminal accesses next time;
authentication data, such as the maximum on-satellite S&F capacity that can be applied for each time or cumulatively for the terminal and is allowed by the network;
information related to a data transmission rate of the terminal, the information being factors that affect the terminal data transmission rate, including, but not limited to: latency, signal quality, and access type;
pre-set information, which can also be described as implementation-dependent information, such as time gap between requests.

The second information is sent in one or more of the following ways:
registration acceptance message, RRC reconfiguration message, UE configuration update message, RRC access response.

Based on the above embodiments, the access network device can also receive a configuration update indication sent by the core network device and send the configuration update indication to the terminal. The configuration update indication is used for updating one or more pieces of information in the second information, and/or, the configuration update indication includes an S&F request prohibition timer indication.

Referring to Fig. 3, Fig. 3 is a flowchart of an information processing method according to an embodiment of this disclosure. The method can be performed by a core network device, such as SMF and AMF. As shown in Fig. 3, the method includes the following step 301.

Step 301: receiving a first S&F request sent by a terminal, wherein the first S&F request is sent based on first information sent by an access network device.

The S&F capability identifier is used for indicating an S&F capability of a satellite, and the S&F margin identifier is used for indicating storage capacity information of the satellite.

In this step, the core network device may receive a registration request sent by the terminal, wherein the registration request includes an S&F identifier; or, the core network device may receive a PDU session establishment request sent by the terminal, wherein the PDU session establishment request includes the S&F identifier. The S&F identifier is used for indicating that the registration request or the PDU session establishment request is an S&F request.

In the embodiment of the disclosure, the terminal sends a first S&F request to the core network device based on the first information obtained from the access network device. Since the first information includes an S&F capability identifier and/or an S&F margin identifier, where the S&F capability identifier indicates an S&F capability of a satellite and the S&F margin identifier indicates storage capacity information of the satellite, the first S&F request sent by the terminal can be determined based on the first information or satisfy the requirements of the first information, thereby enabling reasonable utilization of the S&F resources of the satellite.

In the embodiment of the disclosure, the core network device may further send second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

The description and meaning of the second information can be found in the description of the aforementioned method embodiments.

The S&F satellite operation parameters include one or more of the following:
time trigger information, e.g., a terminal sends a second S&F request at a specific time, or transmits data for on-satellite S&F to the satellite at a specific time;
area trigger information, e.g., when the terminal moves to certain areas (e.g., there is no terrestrial base station, the area is within the satellite coverage but the satellite in the area has no feeder link), the terminal sends a second S&F request, and the terminal transmits on-satellite S&F data to the satellite when the terminal moves to certain areas (e.g., there is no terrestrial base station, the area is within the satellite coverage but the satellite in the area has no feeder link);
event trigger information, e.g., events like the terminal moving too fast or the terminal preferring to use on-satellite S&F.

The core network device may send second information to the terminal based on one or more of the following information:
remaining storage capacity on the satellite;
terminal priority;
service priority;
the amount of on-satellite storage services requested by the terminal this time;
ephemeris information, e.g., the time when the terminal has access to the satellite next time, and the satellite capacity of the satellite network that the terminal accesses next time;
authentication data, such as the maximum on-satellite S&F capacity that can be applied for each time or cumulatively for the terminal and is allowed by the network;
information related to the terminal's data transmission rate, the information being factors affecting the terminal's data transmission rate, such as latency, signal quality, and access type;
pre-set information, which can also be described as implementation-dependent information, such as time gap between requests.

The second information is sent in one or more of the following ways:
registration acceptance message, RRC reconfiguration message, UE configuration update message, RRC access response.

In the embodiment of the disclosure, the core network device may further configure a second timer, wherein the second timer is used for indicating that S&F requests received before the second timer expires will be rejected. That is, before the second timer expires, the access network device rejects or discards an S&F request sent by the terminal, or the access network device rejects or discards an S&F request sent for the PDU session.

The duration of the second timer is less than or equal to the duration of the first timer, and a duration of the first timer is greater than or equal to the time gap determined based on the first time information. The second timer may include a second timer specific to the terminal, or a second timer specific to the PDU session.

When a parameter needs to be updated, the core network device may send a configuration update indication to the terminal. The configuration update indication is used for updating one or more pieces of information in the second information, and/or, the configuration update indication includes an S&F request prohibition timer indication. Meanwhile, the core network device may update and restart the second timer.

The specific implementation process of the embodiments of this disclosure is described below with reference to different examples. The access network device is exemplified by a base station, and the core network device includes AMF, SMF, etc.

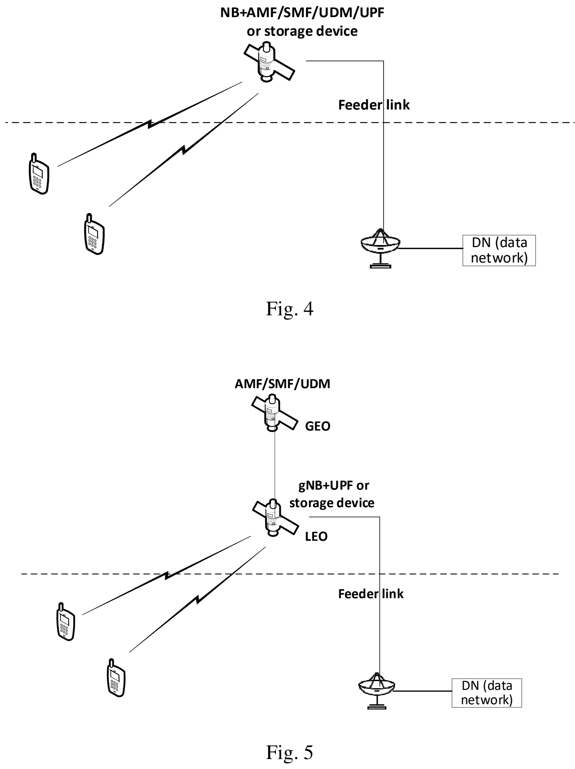

Refer to Figs. 4 and 5, which are schematic diagrams of two implementation architectures of embodiments of this disclosure. However, the embodiments of this disclosure are not limited to these two architectures.

In Fig. 4, a lightweight 5G Core Network (5GC) Access and Mobility Management Function (AMF), Session Management Function (SMF), Unified Data Management Entity (UDM), User Plane Function (UPF), and a base station are deployed on the same satellite. In Fig. 5, the base station, UPF, or storage device is deployed on a Low Earth Orbit (LEO) satellite, while lightweight 5GC AMF, SMF, UDM, etc. are deployed on a Geosynchronous Earth Orbit (GEO) satellite.

In both architectures, the UDM stores subscription information, and the data is temporarily stored in the UPF. Alternatively, additional storage devices can be added and co-located with the UPF. The scheme for activating the S&F mechanism and PDU transmission is consistent across both architectures.

For on-satellite S&F services initiated by a terminal, existing technologies lack resource control mechanisms for on-satellite storage resources through parameter negotiation with the terminal, as well as mechanisms for configuring and updating S&F resource parameters, such as broadcasting S&F capability identifiers, or network indication of the time when the terminal will initiate an S&F service next time. To address these issues, an embodiment of this disclosure proposes an information processing method.

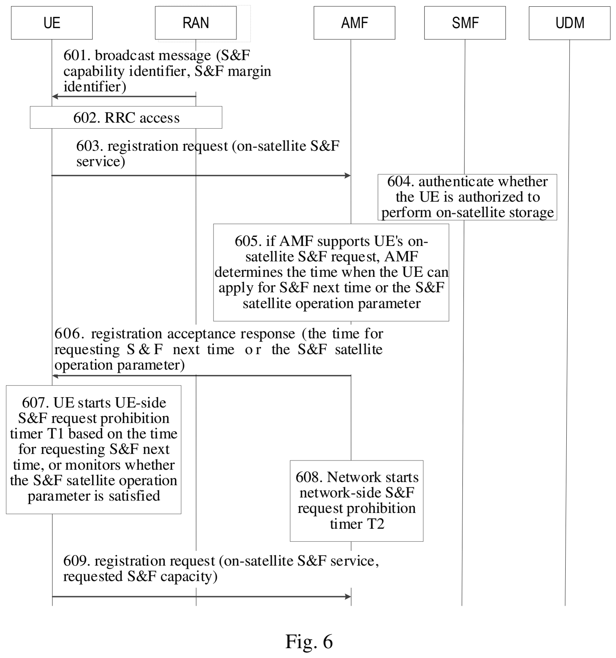

Referring to Fig. 6, Fig. 6 is a flowchart of an information processing method according to an embodiment of this disclosure. Fig. 6 illustrates a registration process at the granularity of user equipment (UE). This process may include steps 601 to 609.

Step 601: The base station (Radio Access Network (RAN) in the drawing) broadcasts a satellite S&F capability identifier, indicating whether the satellite has the on-satellite S&F capability. The base station broadcasts an S&F margin identifier, indicating whether the satellite has storage margin; optionally, the S&F margin identifier may also include on-satellite storage margin.

Step 602: The UE establishes an RRC connection with the base station.

Step 603: The UE initiates a registration request, wherein the registration request includes an S&F identifier, which is used for indicating a request for on-satellite S&F service.

Step 604: Network authenticates whether the UE is authorized to perform on-satellite storage to determine whether the UE can perform on-satellite storage forwarding service.

Step 605: If the AMF supports the UE's on-satellite S&F request, that is, the AMF determines that the UE can perform S&F services, the AMF determines, based on one or more of the following factors, the time when the UE can apply for S&F next time, the S&F satellite operation parameter, the maximum capacity that can be requested for the next S&F, the UE's limited capacity, and whether to send an S&F satellite operation parameter to the UE. The UE's limited capacity refers to the maximum capacity that can be applied for each time or cumulatively for the UE after network authentication. The maximum capacity that can be requested for the next S&F is the maximum capacity that can be applied for when requesting S&F next time for the UE, and is determined by the core network element (such as AMF, SMF, RAN, and other Network Functions (NFs)) based on one or more of the following factors:
a. remaining on-satellite storage space;
b. UE priority/service priority;
c. the amount of on-satellite storage services requested by the UE this time;
d. ephemeris information, e.g., the time when the UE has access to the satellite next time, and the satellite capacity of the satellite network that the UE accesses next time;
e. authentication data, such as the maximum on-satellite S&F capacity that can be applied for each time or cumulatively for the UE and is allowed by the network;
f. factors affecting data transmission rate of the UE, including but not limited to latency, signal quality, and access type;
g. pre-set information.

If the AMF determines that the UE can register but is not allowed to perform S&F services, the AMF will include in the registration acceptance response an identifier indicating that S&F services are rejected, the time for requesting S&F next time, or the S&F satellite operation parameter. If the AMF determines that the UE is not allowed to register, the AMF will directly return a registration failure message.

Step 606: The AMF notifies the UE of the information elements such as, the S&F satellite operation parameter, and/or capacity in the registration acceptance response.

The S&F satellite operation parameter includes, but is not limited to:
a. time trigger information, such as the UE transmitting data for on-satellite S&F to the satellite at a specific time;
b. area trigger information, such as some UEs only transmitting on-satellite S&F data to the satellite when they move to certain areas (there is no terrestrial base station, the area is within the satellite coverage but the satellite in the area has no feeder link);
c. event trigger information, such as UE moving too fast or UE tending to use on-satellite S&F.

The aforementioned specific time, area, and event can be notified to the UE in a NAS message (registration acceptance message, PDU session acceptance message), or can be pre-configured on the UE.

Step 607: The UE sets a first timer, namely "UE-side S&F request prohibition timer T1", based on the time for requesting S&F next time. The duration of timer T1 is greater than or equal to a time gap determined according to the "time for requesting S&F next time" (e.g., the time gap between the current time and the time for requesting S&F next time). Before timer T1 expires, the UE will not send an on-satellite S&F request; or, the UE detects whether the S&F satellite operation parameter is satisfied.

Step 608: The AMF starts a second timer corresponding to the UE, namely "network-side S&F request prohibition timer T2". Before timer T2 expires, the AMF will reject any received S&F requests and indicate that "network-side S&F request prohibition timer T2" has not expired.

The duration of the UE-side S&F request prohibition timer T1 is greater than or equal to the duration of the network-side S&F request prohibition timer T2.

Step 609: When the UE needs to request on-satellite S&F space again and timer T1 expires, the UE sends an initial registration or mobility registration message, which carries the S&F service identifier and optionally carries the requested S&F capacity. The requested S&F capacity is limited by the maximum on-satellite S&F capacity received during the UE registration process that can be applied for each time or cumulatively for the UE and that is allowed by the network.

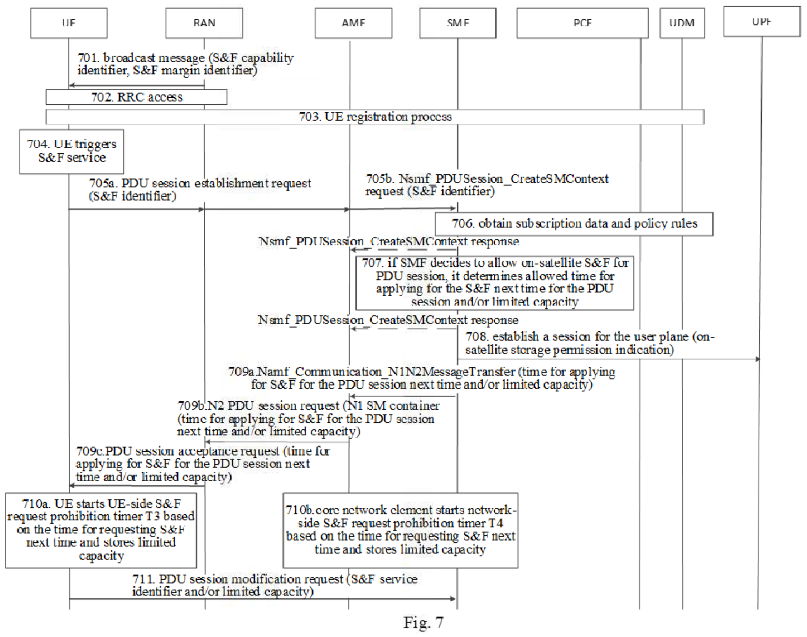

Referring to Fig. 7, Fig. 7 is a flowchart of an information processing method according to an embodiment of this disclosure. Fig. 7 illustrates a PDU creation process at the granularity of service as an example. This process may include steps 701 to 711.

Step 701: The base station (RAN in the drawing) broadcasts a satellite S&F capability identifier, indicating whether the satellite has the on-satellite S&F capability. The base station broadcasts an S&F margin identifier, indicating whether the satellite has storage margin. Optionally, the S&F margin identifier may also include the on-satellite storage margin.

Step 702: The UE establishes an RRC connection with the base station.

Step 703: UE registers with the network (this step can be used to authenticate whether the UE is authorized to perform on-satellite S&F).

Step 704: The UE triggers the S&F service.

Steps 705a-705b: The UE sends a PDU session establishment request to the AMF, which carries the S&F identifier. The AMF sends an Nsmf_PDUSession_CreateSMContext request to the SMF, which carries the S&F identifier.

Step 706: The SMF obtains the subscription data and policy rules of the PDU session.

In some embodiments, the SMF sends an Nsmf_PDUSession_CreateSMContext response to the AMF.

Step 707: If the SMF decides to allow on-satellite S&F for the PDU session, the SMF determines the allowed time for applying for the S&F next time for the PDU session based on one or more of the following factors, optionally carrying the maximum capacity that can be requested for the next S&F or the limited capacity of the PDU session. The limited capacity of the PDU session refers to the maximum capacity that can be applied for each time or cumulatively for the PDU session after network authentication:
a. remaining on-satellite storage space;
b. UE priority/service priority;
c. the amount of on-satellite storage services requested by the UE this time;
d. ephemeris information, e.g., the time when the UE has access to the satellite next time, and the satellite capacity of the satellite network that the UE accesses next time;
e. authentication data, such as the maximum on-satellite S&F capacity that can be applied for each time or cumulatively for the UE and is allowed by the network;
f. factors affecting data transmission rate of UE, including but not limited to latency, signal quality, and access type;
g. pre-set information.

Step 708: The SMF notifies the UPF to establish a session for the user plane and carries an on-satellite storage permission indication.

Step 709: The SMF notifies the UE that the PDU session is accepted, and carries the allowed time for applying for S&F next time for the PDU session, and optionally, carrying the maximum capacity that can be requested for the next S&F or the limited capacity of the PDU session.

In some embodiments, the SMF notifies the AMF of the time for requesting S&F next time, the maximum capacity that can be requested for the next S&F, or the limited capacity of the PDU session. The AMF can obtain this information from the N2 PDU request message or from the Nsmf_PDUSession_CreateSMContext Response message. The Nsmf_PDUSession_CreateSMContext Response message can be sent to the AMF before step 707 (without carrying relevant information elements) or after step 707.

This process may include:
790a, the SMF sends a Namf_Communication_N1N2MessageTransfer message to the AMF, carrying the time for applying for S&F for the PDU session next time and/or limited capacity of the PDU session; 790b, the AMF sends an N2 PDU session request (N1 SM container (N1 reference point set)) to the base station, carrying the time for applying for S&F for the PDU session next time and/or limited capacity of the PDU session; 790c, the base station sends a PDU session acceptance request to the UE, carrying the time for requesting for S&F for the PDU session next time and/or limited capacity of the PDU session.

Step 710a: The UE sets a first timer, namely "UE-side PDU S&F request prohibition timer T3", based on the time for requesting S&F next time. The duration of timer T3 is greater than or equal to the time gap determined based on the received time when the next S&F request of the PDU is allowed (e.g., the time gap between the current time and the time when the next S&F request of the PDU is allowed). Before timer T3 expires, the UE will not send an on-satellite S&F request for the sake of the PDU session with the same PDU ID.

Step 710b: The SMF starts the second timer corresponding to the UE, namely "network-side PDU S&F request prohibition timer T4". Before timer T4 expires, the SMF will reject any received S&F requests and indicate that "network-side PDU S&F request prohibition timer T4" has not expired.

In some embodiments, if the AMF stores a "network-side PDU S&F request prohibition timer T4", the AMF will reject any received storage forwarding requests before timer T4 expires, and indicate that the "network-side PDU S&F request prohibition timer T4" has not expired.

The duration of the UE-side PDU S&F request prohibition timer T3 is greater than or equal to the duration of the network-side PDU S&F request prohibition timer T4.

Step 711: When the UE needs to request on-satellite S&F space again for the PDU session and timer T3 expires, the UE sends a PDU session modification request, the PDU session modification request carrying the S&F service identifier, and optionally, carrying the requested S&F capacity. The requested S&F capacity is limited by:
a. the maximum on-satellite S&F capacity received during the PDU session establishment process that can be applied for each time or cumulatively for the PDU session type and that is allowed by the network; and
b. the maximum on-satellite S&F capacity received during the UE registration process that can be applied for each time or cumulatively for the UE and that is allowed by the network.

During the RRC reconfiguration process, the information determined in step 605 or step 707 as shown in Fig. 6 or Fig. 7 can also be notified to the UE through RRC reconfiguration messages, RRC access responses, etc.

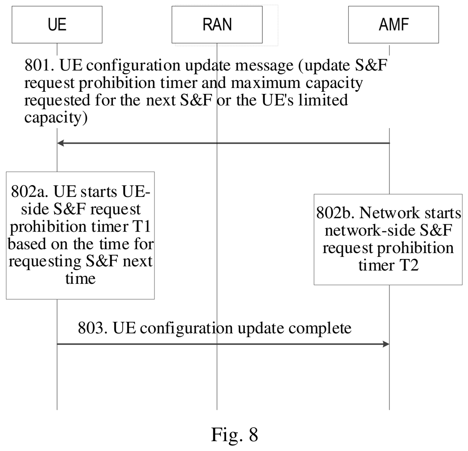

Referring to Fig. 8, Fig. 8 is a flowchart of an information processing method according to an embodiment of this disclosure. Fig. 8 illustrates on-satellite S&F parameter update at the granularity of UE as an example. The process may include steps 801 to 803.

Step 801: When the AMF needs to update an on-satellite S&F parameter, such as the S&F request prohibition timer (first timer), the maximum capacity requested for the next S&F, the UE's limited capacity, or the UE's on-satellite S&F satellite operation parameter, the AMF sends a UE configuration update message to the UE.

Steps 802a-802b: The UE stores and updates the parameter received from the network. If an S&F request prohibition timer is received, timer T1 is updated and restarted, and the AMF updates and restarts the timer T2.

Step 803: If the UE successfully updates the received on-satellite S&F parameter, such as the S&F request prohibition timer, the maximum capacity requested for the next S&F, the UE's limited capacity, or the UE's on-satellite S&F satellite operation parameter (if received), the UE sends a configuration update complete message to the network side. Otherwise, the UE sends a configuration failure message. If the network receives a configuration failure message, the network stops timer T2 and re-initiates steps 801-803.

The above-mentioned process of updating the configuration parameters can be performed independently or in conjunction with the embodiment shown in Fig. 6.

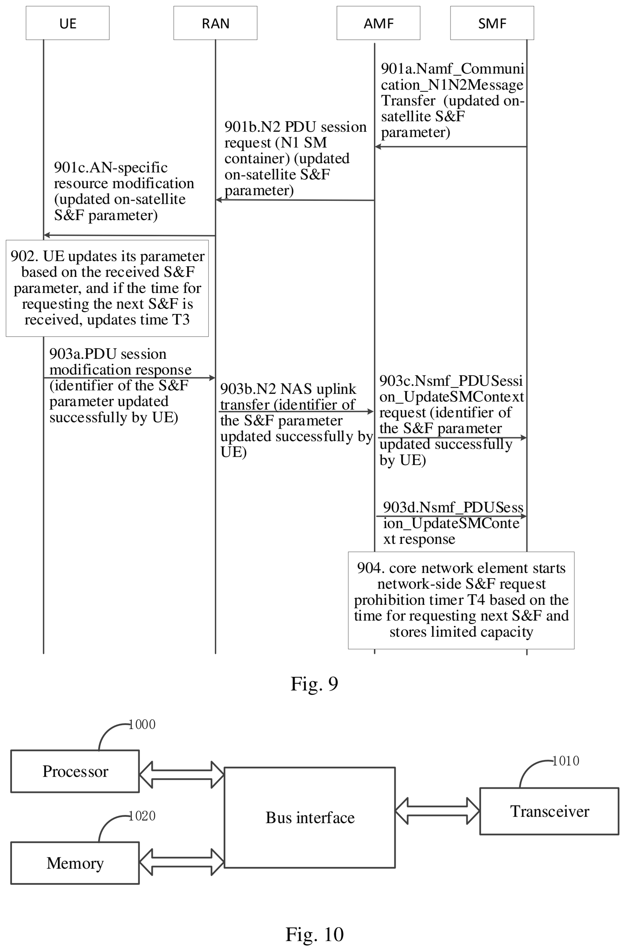

Referring to Fig. 9, Fig. 9 is a flowchart of an information processing method according to an embodiment of this disclosure. Fig. 9 illustrates on-satellite S&F parameter update at the granularity of PDU as an example. The process may include steps 901 to 904.

Step 901: When the SMF needs to update the on-satellite S&F parameter, such as the time for requesting S&F next time, the maximum capacity requested for the next S&F, or the UE's limited capacity, the SMF sends a PDU session modification command to the UE through the AMF, the PDU session modification command carrying the to-be-updated on-satellite S&F parameter.

The step 901 may include:
Step 901a: the SMF sends a Namf_Communication_N1N2MessageTransfer to the AMF, the Namf_Communication_N1N2MessageTransfer message carrying the updated on-satellite S&F parameter. Step 901b: The AMF sends an N2 PDU session request (N1 SM container) carrying the updated on-satellite S&F parameter to the base station. Step 901c: AN-specific resource modification, carrying the updated on-satellite S&F parameter.
Step 902: The UE stores and updates the parameter received from the network. If the time for requesting the next S&F is received, timer T3 is updated and restarted, and the network updates and restarts timer T4.
Step 903: The UE successfully updates the received on-satellite S&F parameter, such as the PDU S&F request prohibition timer T3, the maximum capacity requested for the next S&F, or the UE's limited capacity (if received). The UE then sends a PDU session response message to the SMF.

The step 903 may include:
Step 903a: The UE sends a PDU session modification response to the base station, which carries the identifier of the S&F parameter updated successfully by the terminal; Step 903b: The base station sends an N2 NAS uplink transfer to the AMF, the N2 NAS uplink transfer message carrying the identifier of the S&F parameter updated successfully by the terminal; Step 903c: The AMF sends an Nsmf_PDUSession_UpdateSMContext request to the SMF, the Nsmf_PDUSession_UpdateSMContext request carrying the identifier of the S&F parameter updated successfully by the terminal; Step 903d: The SMF sends an Nsmf_PDUSession_UpdateSMContext response to the AMF.
Step 904: A core network element (such as SMF or AMF) updates the corresponding parameter. Specifically, the core network element starts a network-side S&F request prohibition timer T4 based on the time for requesting next S&F and stores a limited capacity. Which core network element updates the parameter depends on in which network element the S&F context (parameter) is stored in the embodiment shown in Fig. 7.

The step 904 can occur after the SMF receives the Nsmf_PDUSession_UpdateSMContext request message, or occur after the Namf_Communication_N1N2Message Transfer message is sent.

The above-mentioned process of updating the configuration parameter can be performed independently or in conjunction with the embodiment shown in Fig. 7.

As can be seen from the above description, the solution using the embodiments of this disclosure can make reasonable use of the S&F resources of the satellite.

The technical solution provided in the embodiments of this disclosure is applicable to a variety of systems, especially fifth-generation (5G) mobile communication systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include a terminal device and a network device. The system may also include a core network component, such as an evolved packet system (EPS) or a 5G system (5GS).

The terminal device involved in the embodiments of this disclosure can be a device that provides voice and/or data connectivity to users, a handheld device with wireless connectivity, or other processing device connected to a wireless modem. The names of the terminal device may differ in different systems; for example, in a 5G system, a terminal device can be called user equipment (UE). The wireless terminal device can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-built-in, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, which is not limited in this disclosure.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to convert received air frames into Internet Protocol (IP) packets or vice versa, acting as a router between the wireless terminal device and the rest of the access network, which may include an Internet Protocol (IP) communication network. The network device may also coordinate the attribute management of the air interface. For example, the network device involved in the embodiments of this disclosure can be a base transceiver station (BTS) in a Global System for Mobile communications (GSM) or Code Division Multiple Access (CDMA) system, a NodeB in a Wide-band Code Division Multiple Access (WCDMA) system, an evolved Node B (eNB or e-NodeB) in a long-term evolution (LTE) system, a 5G base station (gNB) in a next-generation 5G network architecture, a Home evolved Node B (HeNB), a relay node, a femto, a pico, etc., and is not limited in this disclosure. In some network structures, the network device may include centralized unit (CU) nodes and distributed unit (DU) nodes, and the centralized unit and distributed unit may be geographically separated.

Network devices and terminal devices can each use one or more antennas to perform multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be 2D-MIMO, 3D-MIMO, full-dimensional MIMO (FD-MIMO), or massive-MIMO. It can also be diversity transmission, pre-coded transmission, or beamforming transmission, etc.

As shown in Fig. 10, an information processing apparatus according to an embodiment of this disclosure is applied to an access network device, and includes: a processor 1000, which is used for reading a program from a memory 1020 and executing the following step:
sending first information to a terminal, wherein the first information includes an S&F capability identifier and/or an S&F margin identifier;
wherein the S&F capability identifier is used for indicating an S&F capability of a satellite, and the S&F margin identifier is used for indicating storage capacity information of the satellite;
a transceiver 1010, which is used for receiving and sending data under the control of the processor 1000.

In Fig. 10, the bus architecture may include any number of interconnected buses and bridges, specifically linking various circuits of one or more processors represented by the processor 1000 and memory represented by the memory 1020. The bus architecture may also link various other circuits such as peripheral devices, voltage regulators, and power management circuits, which are well known in the art and therefore will not be described further herein. The bus interface provides an interface. The transceiver 1010 may be multiple elements, including a transmitter and a receiver, providing a unit for communicating with various other devices over a transmission medium. The processor 1000 is responsible for managing the bus architecture and general processing, and the memory 1020 may store data used by the processor 1000 during operation.

The processor 1000 can be a central processing unit (CPU), an application-specific integrated circuit (ASIC), a field-programmable gate array (FPGA), or a complex programmable logic device (CPLD). The processor can also adopt a multi-core architecture.

The processor 1000 is responsible for managing the bus architecture and general processing, and the memory 1020 can store the data used by the processor 1000 when performing operations.

The processor 1000 is also used for reading the program and performing the following step:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to a first S&F request sent by the terminal.

The processor 1000 is also used for reading the program and performing the following step:
sending second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

The processor 1000 is also used for reading the program and performing the following steps:
receiving a configuration update indication sent by a core network device, wherein the configuration update indication is used for updating one or more pieces of information in the second information, and/or the configuration update indication includes an S&F request prohibition timer indication;
sending the configuration update indication to the terminal.

It should be noted that the apparatus according to the embodiment can implement all the method steps implemented in the above method embodiment and can achieve the same technical effect. Therefore, the parts and beneficial effects that are the same as those in the method embodiment will not be described in detail here.

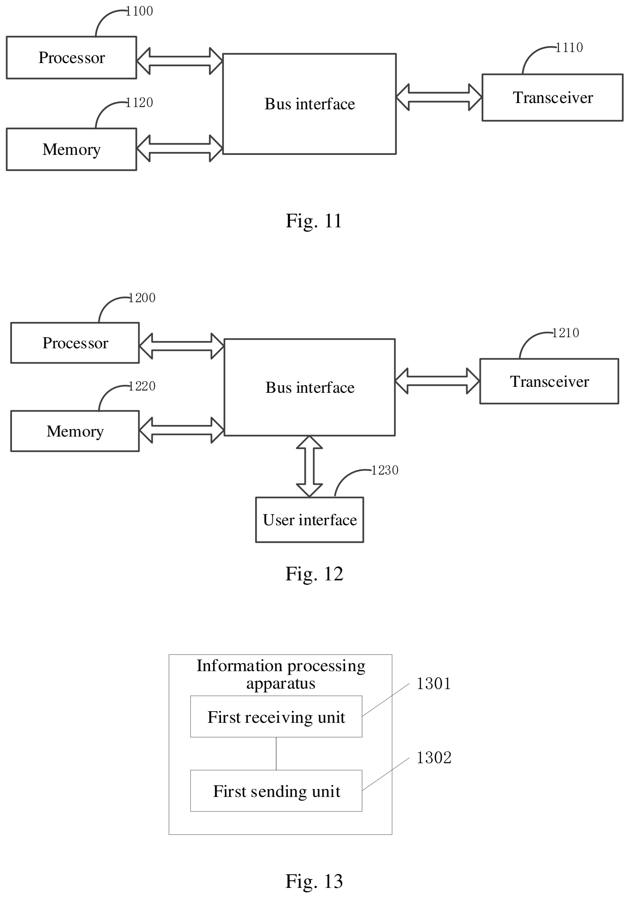

As shown in Fig. 11, an information processing apparatus according to an embodiment of this disclosure is applied to a core network device and includes: a processor 1100, which is used for reading a program from a memory 1120 and executing the following step:
receiving a first S&F request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite;
a transceiver 1111, which is used for receiving and sending data under the control of processor 1100.

**In** Fig. 11, the bus architecture may include any number of interconnected buses and bridges, specifically linking various circuits of one or more processors represented by the processor 1100 and memory represented by the memory 1120. The bus architecture may also link various other circuits such as peripheral devices, voltage regulators, and power management circuits, which are well known in the art and therefore will not be described further herein. The bus interface provides an interface. The transceiver 1111 may be multiple elements, including a transmitter and a receiver, providing a unit for communicating with various other devices over a transmission medium. The processor 1100 is responsible for managing the bus architecture and general processing, and the memory 1120 may store data used by the processor 1100 during operation.

The processor 1100 can be a central processing unit (CPU), an application-specific integrated circuit (ASIC), a field-programmable gate array (FPGA), or a complex programmable logic device (CPLD). The processor can also adopt a multi-core architecture.

The processor 1100 is responsible for managing the bus architecture and general processing, and the memory 1120 can store the data used by the processor 1100 when performing operations.

The processor 1100 is also used for reading the program and performing the following step:
receiving a registration request sent by the terminal, wherein the registration request includes an S&F identifier; or
receiving a PDU session establishment request sent by the terminal, wherein the PDU session establishment request includes the S&F identifier.

The processor 1100 is also used for reading the program and performing the following step:
sending second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

The processor 1100 is also used for reading the program and performing the following step:
sending second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the second information is sent in one or more of the following ways:
registration acceptance message, RRC reconfiguration message, UE configuration update message, RRC access response;
   and/or
the second S&F request is sent in one or more of the following ways:
   registration message, PDU session establishment request, PDU session modification request.

In some embodiments, the S&F satellite operation parameter includes one or more of the following:
time trigger information;
area trigger information;
event trigger information.

The processor 1100 is also used for reading the program and performing the following step:
setting a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

The processor 1100 is also used for reading the program and performing the following steps:
sending a configuration update indication to the terminal, wherein the configuration update indication is used for updating one or more pieces of information in the second information, and/or, the configuration update indication includes an S&F request prohibition timer indication;
updating and restarting the second timer.

It should be noted that the apparatus according to the embodiment can implement all the method steps implemented in the above method embodiment and can achieve the same technical effect. Therefore, the parts and beneficial effects that are the same as those in the method embodiment will not be described in detail here.

As shown in Fig. 12, an information processing apparatus according to an embodiment of this disclosure is applied to a terminal and includes: a processor 1200, which is used for reading a program from a memory 1220 and executing the following steps:
receiving first information sent by an access network device, wherein the first information includes an S&F capability identifier and/or an S&F margin identifier; and
sending a first S&F request to a core network device based on the first information;
wherein the S&F capability identifier is used for indicating an S&F capability of a satellite, and the S&F margin identifier is used for indicating storage capacity information of the satellite;
a transceiver 1210, which is used for receiving and sending data under the control of the processor 1200.

In Fig. 12, the bus architecture may include any number of interconnected buses and bridges, specifically linking various circuits of one or more processors represented by the processor 1200 and memory represented by the memory 1220. The bus architecture may also link various other circuits such as peripheral devices, voltage regulators, and power management circuits, which are well known in the art and therefore will not be described further herein. The bus interface provides an interface. Transceiver 1210 may be multiple components, including a transmitter and a receiver, providing a unit for communicating with various other devices over a transmission medium. For different user equipment, user interface 1230 may also be an interface capable of connecting external or internal devices, including but not limited to a keypad, a display, a speaker, a microphone, a joystick, etc.

The processor 1200 is responsible for managing the bus architecture and general processing, and the memory 1220 can store the data used by the processor 1200 when performing operations.

The processor 1200 can be a central processing unit (CPU), an application-specific integrated circuit (ASIC), a field-programmable gate array (FPGA), or a complex programmable logic device (CPLD). The processor can also adopt a multi-core architecture.

By invoking a computer program stored in the memory, the processor executes any of the methods described in the embodiments of this disclosure according to the obtained executable instructions. The processor and the memory may also be physically separated.

The processor 1200 is also used for reading the program and performing the following step:
sending a registration request to the core network device based on the first information, wherein the registration request includes an S&F identifier; or
sending a PDU session establishment request to the core network device based on the first information, wherein the PDU session establishment request includes the S&F identifier.

The processor 1200 is also used for reading the program and performing the following step:
receiving second information sent by a network device, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

The processor 1200 is also used for reading the program and performing one or more of the following steps:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

In some embodiments, the S&F satellite operation parameter includes one or more of the following:
time trigger information;
area trigger information;
event trigger information.

In some embodiments, the second information is sent in one or more of the following ways:
registration acceptance message, RRC reconfiguration message, UE configuration update message, RRC access response; and/or
the second S&F request is sent in one or more of the following ways:
   registration message, PDU session establishment request, PDU session modification request.

The processor 1200 is also used for reading the program and performing the following steps:
receiving a configuration update indication sent by the core network device, wherein the configuration update indication is used for updating one or more pieces of information in the second information, and/or, the configuration update indication includes an S&F request prohibition timer indication;
updating the second information according to the configuration update indication, and/or updating and restarting the first timer.

It should be noted that the apparatus according to the embodiment can implement all the method steps implemented in the above method embodiment and can achieve the same technical effect. Therefore, the parts and beneficial effects that are the same as those in the method embodiment will not be described in detail here.

As shown in Fig. 13, an information processing apparatus according to an embodiment of this disclosure is applied to a terminal, and includes:
a first receiving unit 1301, configured to receive first information sent by an access network device, wherein the first information includes an S&F capability identifier and/or an S&F margin identifier;
a first sending unit 1302, configured to send a first S&F request to the core network device according to the first information;
wherein the S&F capability identifier is used for indicating an S&F capability of a satellite, and the S&F margin identifier is used for indicating storage capacity information of the satellite.

In some embodiments, the first sending unit is configured to:
send a registration request to the core network device based on the first information, wherein the registration request includes an S&F identifier; or
send a PDU session establishment request to the core network device based on the first information, wherein the PDU session establishment request includes the S&F identifier.

In some embodiments, the apparatus may further include:
a second receiving unit, configured to receive second information sent by a network device, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

In some embodiments, the apparatus may further include a first processing unit configured to perform one or more of the following:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

In some embodiments, the S&F satellite operation parameter includes one or more of the following:
time trigger information;
area trigger information;
event trigger information.

In some embodiments, the second information is sent in one or more of the following ways:
registration acceptance message, radio resource control (RRC) reconfiguration message, user equipment (UE) configuration update message, RRC access response; and/or
the second S&F request is sent in one or more of the following ways:
   registration message, PDU session establishment request, PDU session modification request.

In some embodiments, the apparatus may further include:
a third receiving unit, configured to receive a configuration update indication sent by the core network device, wherein the configuration update indication is used for updating one or more pieces of information in the second information, and/or the configuration update indication includes an S&F request prohibition timer indication;
a second processing unit, configured to update the second information according to the configuration update indication, and/or update and restart the first timer.

It should be noted that the apparatus according to the embodiment of this disclosure can implement all the method steps implemented in the above method embodiment and can achieve the same technical effect. Therefore, the parts and beneficial effects that are the same as those in the method embodiment will not be described in detail here.

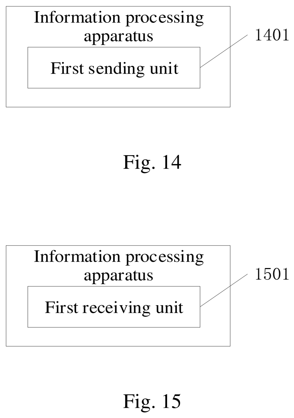

As shown in Fig. 14, an information processing apparatus according to an embodiment of this disclosure is applied to an access network device and includes:
a first sending unit 1401, configured to send first information to a terminal, wherein the first information includes an S&F capability identifier and/or an S&F margin identifier;
wherein the S&F capability identifier is used for indicating an S&F capability of a satellite, and the S&F margin identifier is used for indicating storage capacity information of the satellite.

In some embodiments, the apparatus may further include:
a second sending unit, configured to send second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to a first S&F request sent by the terminal.

In some embodiments, the second sending unit is configured to send second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

In some embodiments, the apparatus may further include:
a first receiving unit, configured to receive a configuration update indication sent by the core network device, wherein the configuration update indication is used for updating one or more pieces of information in the second information, and/or the configuration update indication includes an S&F request prohibition timer indication;
a third sending unit, configured to send the configuration update indication to the terminal.

It should be noted that the apparatus according to the embodiment of this disclosure can implement all the method steps implemented in the above method embodiment and can achieve the same technical effect. Therefore, the parts and beneficial effects that are the same as those in the method embodiment will not be described in detail here.

As shown in Fig. 15, an information processing apparatus according to an embodiment of this disclosure is applied to a core network device and includes:
a first receiving unit 1501, configured to receive a first S&F request sent by the terminal, wherein the first S&F request is sent based on first information sent by an access network device;
wherein the S&F capability identifier is used for indicating an S&F capability of a satellite, and the S&F margin identifier is used for indicating storage capacity information of the satellite.

In some embodiments, the first receiving unit is further configured to:
receive a registration request sent by the terminal, wherein the registration request includes an S&F identifier; or
receive a PDU session establishment request sent by the terminal, wherein the PDU session establishment request includes the S&F identifier.

In some embodiments, the apparatus may further include:
a first sending unit, configured to send second information to the terminal, wherein the second information includes one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request includes an S&F request temporally subsequent to the first S&F request.

**In** some embodiments, the first sending unit is configured to send second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

**In** some embodiments, the second information is sent in one or more of the following ways:
registration acceptance message, RRC reconfiguration message, UE configuration update message, RRC access response;
   and/or
the second S&F request is sent in one or more of the following ways:
   registration message, PDU session establishment request, PDU session modification request.

**In** some embodiments, the S&F satellite operation parameter includes one or more of the following:
time trigger information;
area trigger information;
event trigger information.

**In** some embodiments, the apparatus may further include:
a first processing unit, configured to set a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

In some embodiments, the apparatus may further include:
a second sending unit, configured to send a configuration update indication to the terminal, wherein the configuration update indication is used for updating one or more pieces of information in the second information, and/or the configuration update indication includes an S&F request prohibition timer indication;
a second processing unit, configured to update and restart the second timer.

It should be noted that the apparatus according to the embodiment of this disclosure can implement all the method steps implemented in the above method embodiment and can achieve the same technical effect. Therefore, the parts and beneficial effects that are the same as those in the method embodiment will not be described in detail here.

It should be noted that the division of units in the embodiments of this disclosure is illustrative and only indicates one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to the prior art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure further provides a communication device, including: a memory, a processor, and a program stored in the memory and executable by the processor, wherein the processor executes the program to implement the steps in the information processing method described above.

An embodiment of this disclosure further provides a processor-readable storage medium storing a program. When the program is executed by a processor, it implements the various processes of the above-described information processing method embodiments and achieves the same technical effect. To avoid repetition, it will not be described again here. The readable storage medium can be any available medium or data storage device that the processor can access, including but not limited to magnetic storage (e.g., floppy disks, hard disks, magnetic tapes, magneto-optical discs (MO), etc.), optical storage (e.g., compact discs (CDs), digital video discs (DVDs), Blu-ray discs (BDs), high-definition versatile discs (HVDs), etc.), and semiconductor storage (e.g., ROMs, erasable programmable read-only memory (EPROMs), electrically erasable programmable read-only memory (EEPROMs), non-volatile memory (NAND flash), solid-state disks (SSDs), etc.).

It should be noted that, in this document, the terms "including", "comprising", or any other variations thereof are intended to cover non-exclusive inclusion, such that a process, method, article, or apparatus that includes a list of elements includes not only those elements but also other elements not expressly listed, or elements inherent to such a process, method, article, or apparatus. Unless otherwise specified, an element defined by the phrase "including a ..." does not exclude the presence of other identical elements in the process, method, article, or apparatus that includes that element.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of this disclosure, in essence, or the part that contributes to the prior art, can be embodied in the form of a software product. This computer software product is stored in a storage medium (such as ROM/RAM, magnetic disk, optical disc) and includes several instructions to cause a terminal (which may be a mobile phone, computer, server, air conditioner, or network device, etc.) to execute the methods described in the various embodiments of this disclosure.

It should be noted that the above division of modules is merely a logical functional division. In actual implementation, they can be fully or partially integrated into a single physical entity, or they can be physically separated. Furthermore, these modules can be implemented entirely in software called by a processing element; they can be fully implemented in hardware; or some modules can be implemented by software called by a processing element, while others are implemented in hardware. For example, a determination module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be achieved through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using processing element scheduler code, the processing element can be a general-purpose processor, such as a central processing unit (CPU) or other processor capable of calling program code. Furthermore, these modules can be integrated together to form a system-on-a-chip (SOC).

The terms "first", "second" and the like used in the specification and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having", and any variations thereof, are intended to cover non- exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus. Additionally, the use of "and/or" in the specification and claims indicates at least one of the connected objects, for example, A and/or B and/or C indicates seven possibilities: A alone, B alone, C alone, and both A and B, both B and C, both A and C, and A, B, and C. Similarly, the use of "at least one of A or B" in this specification and claims should be understood as "A alone, B alone, or both A and B."

The embodiments of this disclosure have been described above with reference to the accompanying drawings. However, this disclosure is not limited to the specific embodiments described above. The specific embodiments described above are merely illustrative and not restrictive. Those skilled in the art can make many other forms under the guidance of this disclosure without departing from the scope of the claims, and all of these forms are within the scope of this disclosure.

## Claims

1. An information processing method, performed by a terminal, comprising:
receiving first information sent by an access network device, wherein the first information comprises a store and forward (S&F) capability identifier and/or an S&F margin identifier; and
sending a first S&F request to a core network device based on the first information;
wherein the S&F capability identifier is used for indicating an S&F capability of a satellite, and the S&F margin identifier is used for indicating storage capacity information of the satellite.

2. The method according to claim 1, wherein the sending the first S&F request to the core network device based on the first information comprises:
sending a registration request to the core network device based on the first information, wherein the registration request comprises an S&F identifier; or
sending a protocol data unit (PDU) session establishment request to the core network device based on the first information, wherein the PDU session establishment request comprises the S&F identifier.

3. The method according to claim 2, further comprising:
receiving second information sent by a network device, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

4. The method according to claim 3, further comprising one or more of the following:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

5. The method according to claim 3 or 4, wherein the S&F satellite operation parameter comprises one or more of the following:
time trigger information;
area trigger information;
event trigger information.

6. The method according to claim 3, wherein,
the second information is sent in one or more of the following ways:
registration acceptance message, radio resource control (RRC) reconfiguration message, user equipment (UE) configuration update message, RRC access response; and/or
the second S&F request is sent in one or more of the following ways:
registration message, PDU session establishment request, PDU session modification request.

7. The method according to claim 4, further comprising:
receiving a configuration update indication sent by the core network device, wherein the configuration update indication is used for updating one or more pieces of information in the second information, and/or, the configuration update indication comprises an S&F request prohibition timer indication;
updating the second information according to the configuration update indication, and/or updating and restarting the first timer.

8. An information processing method, performed by an access network device, comprising:
sending first information to a terminal, wherein the first information comprises a store and forward (S&F) capability identifier and/or an S&F margin identifier;
wherein the S&F capability identifier is used for indicating an S&F capability of a satellite, and the S&F margin identifier is used for indicating storage capacity information of the satellite.

9. The method according to claim 8, further comprising:
sending second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to a first S&F request sent by the terminal.

10. The method according to claim 8, wherein the sending the second information to the terminal comprises:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

11. The method according to claim 9, further comprising:
receiving a configuration update indication sent by a core network device, wherein the configuration update indication is used for updating one or more pieces of information in the second information, and/or, the configuration update indication comprises an S&F request prohibition timer indication; and
sending the configuration update indication to the terminal.

12. An information processing method, performed by a core network device, comprising:
receiving a first store and forward (S&F) request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

13. The method according to claim 12, wherein the receiving the first S&F request sent by the terminal comprises:
receiving a registration request sent by the terminal, wherein the registration request comprises an S&F identifier; or
receiving a PDU session establishment request sent by the terminal, wherein the PDU session establishment request comprises the S&F identifier.

14. The method according to claim 12, further comprising:
sending second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

15. The method according to claim 14, wherein the sending the second information to the terminal comprises:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

16. The method according to claim 14, wherein,
the second information is sent in one or more of the following ways:
registration acceptance message, RRC reconfiguration message, UE configuration update message, RRC access response;
and/or
the second S&F request is sent in one or more of the following ways:
registration message, PDU session establishment request, PDU session modification request.

17. The method according to claim 14, wherein the S&F satellite operation parameter comprises one or more of the following:
time trigger information;
area trigger information;
event trigger information.

18. The method according to claim 14, further comprising:
setting a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

19. The method according to claim 18, further comprising:
sending a configuration update indication to the terminal, wherein the configuration update indication is used for updating one or more pieces of information in the second information, and/or, the configuration update indication comprises an S&F request prohibition timer indication;
updating and restarting the second timer.

20. An information processing apparatus, applied to a terminal, comprising: a memory, a transceiver, and a processor; wherein
the memory is used for storing a computer program; the transceiver is used for sending and receiving data under the control of the processor; and the processor is used for reading the computer program from the memory and performing the following steps:
receiving first information sent by an access network device, wherein the first information comprises a store and forward (S&F) capability identifier and/or an S&F margin identifier; and
sending a first S&F request to a core network device based on the first information;
wherein the S&F capability identifier is used for indicating an S&F capability of a satellite, and the S&F margin identifier is used for indicating storage capacity information of the satellite.

21. The apparatus according to claim 20, wherein the processor is further used for reading the computer program from the memory and performing the following steps:
sending a registration request to the core network device based on the first information, wherein the registration request comprises an S&F identifier; or
sending a PDU session establishment request to the core network device based on the first information, wherein the PDU session establishment request comprises the S&F identifier.

22. The apparatus according to claim 21, wherein the processor is further used for reading the computer program from the memory and performing the following steps:
receiving second information sent by a network device, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

23. The apparatus according to claim 22, wherein the processor is further used for reading the computer program from the memory and performing one or more of the following steps:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

24. The apparatus according to claim 22 or 23, wherein the S&F satellite operation parameter comprises one or more of the following:
time trigger information;
area trigger information;
event trigger information.

25. The apparatus according to claim 22, wherein,
the second information is sent in one or more of the following ways:
registration acceptance message, RRC reconfiguration message, UE configuration update message, RRC access response; and/or
the second S&F request is sent in one or more of the following ways:
registration message, PDU session establishment request, PDU session modification request.

26. The apparatus according to claim 23, wherein the processor is further used for reading the computer program from the memory and performing the following steps:
receiving a configuration update indication sent by the core network device, wherein the configuration update indication is used for updating one or more pieces of information in the second information, and/or, the configuration update indication comprises an S&F request prohibition timer indication;
updating the second information according to the configuration update indication, and/or updating and restarting the first timer.

27. An information processing apparatus, applied to an access network device, comprising: a memory, a transceiver, and a processor; wherein
the memory is used for storing a computer program; the transceiver is used for sending and receiving data under the control of the processor; and the processor is used for reading the computer program from the memory and performing the following step:
sending first information to a terminal, wherein the first information comprises a store and forward (S&F) capability identifier and/or an S&F margin identifier;
wherein the S&F capability identifier is used for indicating an S&F capability of a satellite, and the S&F margin identifier is used for indicating storage capacity information of the satellite.

28. The apparatus according to claim 27, wherein the processor is further used for reading the computer program from the memory and performing the following step:
sending second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to a first S&F request sent by the terminal.

29. The apparatus according to claim 27, wherein the processor is further used for reading the computer program from the memory and performing the following steps:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

30. The apparatus according to claim 28, wherein the processor is further used for reading the computer program from the memory and performing the following steps:
receiving a configuration update indication sent by a core network device, wherein the configuration update indication is used for updating one or more pieces of information in the second information, and/or, the configuration update indication comprises an S&F request prohibition timer indication;
sending the configuration update indication to the terminal.

31. An information processing apparatus, applied to a core network device, comprising: a memory, a transceiver, and a processor; wherein
the memory is used for storing a computer program; the transceiver is used for sending and receiving data under the control of the processor; and the processor is used for reading the computer program from the memory and performing the following steps:
receiving a first store and forward (S&F) request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

32. The apparatus according to claim 31, wherein the processor is further used for reading the computer program from the memory and performing the following step:
receiving a registration request sent by the terminal, wherein the registration request comprises an S&F identifier; or
receiving a PDU session establishment request sent by the terminal, wherein the PDU session establishment request comprises the S&F identifier.

33. The apparatus according to claim 31, wherein the processor is further used for reading the computer program from the memory and performing the following step:
sending second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

34. The apparatus according to claim 33, wherein the processor is further used for reading the computer program from the memory and performing the following step:
sending the second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

35. The apparatus according to claim 33, wherein the second information is sent in one or more of the following ways:
registration acceptance message, RRC reconfiguration message, UE configuration update message, RRC access response;
and/or
the second S&F request is sent in one or more of the following ways:
registration message, PDU session establishment request, PDU session modification request.

36. The apparatus according to claim 33, wherein the S&F satellite operation parameter comprises one or more of the following:
time trigger information;
area trigger information;
event trigger information.

37. The apparatus according to claim 33, wherein the processor is further used for reading the computer program from the memory and performing the following step:
setting a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

38. The apparatus according to claim 37, wherein the processor is further used for reading the computer program from the memory and performing the following steps:
sending a configuration update indication to the terminal, wherein the configuration update indication is used for updating one or more pieces of information in the second information, and/or, the configuration update indication comprises an S&F request prohibition timer indication;
updating and restarting the second timer.

39. An information processing apparatus, applied to a terminal, comprising:
a first receiving unit, configured to receive first information sent by an access network device, wherein the first information comprises an S&F capability identifier and/or an S&F margin identifier;
a first sending unit, configured to send a first S&F request to a core network device based on the first information;
wherein the S&F capability identifier is used for indicating an S&F capability of a satellite, and the S&F margin identifier is used for indicating storage capacity information of the satellite.

40. The apparatus according to claim 39, wherein the first sending unit is configured to:
send a registration request to the core network device based on the first information, wherein the registration request comprises an S&F identifier; or
send a protocol data unit (PDU) session establishment request to the core network device based on the first information, wherein the PDU session establishment request comprises the S&F identifier.

41. The apparatus according to claim 40, further comprising:
a second receiving unit, configured to receive second information sent by a network device, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

42. The apparatus according to claim 41, further comprising a first processing unit configured to perform one or more of the following steps:
setting a first timer, wherein a duration of the first timer is greater than or equal to the time gap determined according to the first time information, and the first timer is used for indicating that it is prohibited to send the second S&F request before the first timer expires;
upon detecting that the S&F satellite operation parameter is satisfied, sending the second S&F request;
sending the second S&F request;
wherein an on-satellite storage capacity requested by the second S&F request meets the on-satellite storage capacity requirement indicated by the first indication information.

43. The apparatus according to claim 41 or 42, wherein the S&F satellite operation parameter comprises one or more of the following:
time trigger information;
area trigger information;
event trigger information.

44. The apparatus according to claim 41, wherein the second information is sent in one or more of the following ways:
registration acceptance message, radio resource control (RRC) reconfiguration message, user equipment (UE) configuration update message, RRC access response; and/or
the second S&F request is sent in one or more of the following ways:
registration message, PDU session establishment request, PDU session modification request.

45. The apparatus according to claim 42, further comprising:
a third receiving unit, configured to receive a configuration update indication sent by the core network device, wherein the configuration update indication is used for updating one or more pieces of information in the second information, and/or the configuration update indication comprises an S&F request prohibition timer indication;
a second processing unit, configured to update the second information according to the configuration update indication, and/or update and restart the first timer.

46. An information processing apparatus, applied to an access network device, comprising:
a first sending unit, configured to send first information to a terminal, wherein the first information comprises an S&F capability identifier and/or an S&F margin identifier;
wherein the S&F capability identifier is used for indicating an S&F capability of a satellite, and the S&F margin identifier is used for indicating storage capacity information of the satellite.

47. The apparatus according to claim 46, further comprising:
a second sending unit, configured to send second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to a first S&F request sent by the terminal.

48. The apparatus according to claim 46, wherein the second sending unit is configured to send second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

49. The apparatus according to claim 47, further comprising:
a first receiving unit, configured to receive a configuration update indication sent by a core network device, wherein the configuration update indication is used for updating one or more pieces of information in the second information, and/or the configuration update indication comprises an S&F request prohibition timer indication;
a third sending unit, configured to send the configuration update indication to the terminal.

50. An information processing apparatus, applied to a core network device, comprising:
a first receiving unit, configured to receive a first S&F request sent by a terminal, wherein the first S&F request is sent based on first information sent by an access network device;
wherein the S&F capability identifier is used for indicating an S&F capability of a satellite, and the S&F margin identifier is used for indicating storage capacity information of the satellite.

51. The apparatus according to claim 50, wherein the first receiving unit is further configured to:
receive a registration request sent by the terminal, wherein the registration request comprises an S&F identifier; or
receive a PDU session establishment request sent by the terminal, wherein the PDU session establishment request comprises the S&F identifier.

52. The apparatus according to claim 50, further comprising:
a first sending unit, configured to send second information to the terminal, wherein the second information comprises one or more of the following:
first time information, used for indicating a transmission time of a second S&F request specific to the terminal or a PDU session, or used for indicating a time gap between a current time and the transmission time of the second S&F request;
first indication information, used for indicating an on-satellite storage capacity requirement associated with the second S&F request;
an S&F satellite operation parameter;
wherein the second S&F request comprises an S&F request temporally subsequent to the first S&F request.

53. The apparatus according to claim 52, wherein the first sending unit is configured to send second information to the terminal based on one or more of the following information:
remaining storage capacity on the satellite;
terminal priority;
service priority;
the amount of on-satellite storage services requested by the terminal this time;
ephemeris information;
authentication data;
information related to a data transmission rate of the terminal;
pre-set information.

54. The apparatus according to claim 52, wherein the second information is sent in one or more of the following ways:
registration acceptance message, RRC reconfiguration message, UE configuration update message, RRC access response;
and/or
the second S&F request is sent in one or more of the following ways:
registration message, PDU session establishment request, PDU session modification request.

55. The apparatus according to claim 52, wherein the S&F satellite operation parameter comprises one or more of the following:
time trigger information;
area trigger information;
event trigger information.

56. The apparatus according to claim 52, further comprising:
a first processing unit, configured to set a second timer, wherein the second timer is used for indicating that an S&F request received before the second timer expires will be rejected;
wherein, a duration of the second timer is less than or equal to a duration of a first timer, and the duration of the first timer is greater than or equal to a time gap determined according to the first time information.

57. The apparatus according to claim 56, further comprising:
a second sending unit, configured to send a configuration update indication to the terminal, wherein the configuration update indication is used for updating one or more pieces of information in the second information, and/or the configuration update indication comprises an S&F request prohibition timer indication;
a second processing unit, configured to update and restart the second timer.

58. A processor-readable storage medium storing a computer program, wherein the computer program is configured to cause a processor to perform the method according to any one of claims 1 to 19.
